# EUROPEAN PATENT SPECIFICATION

(11) **EP 1 429 507 B1**
(45) Date of publication and mention of the grant of the patent: **04.07.2007**
(21) Application number: 03017116.9
(22) Date of filing: 28.07.2003
(51) Int. Cl.: H04L 27/12, H04B 10/155

(54) **Optical CRZ transmitter using mach-zehnder modulator**
CRZ optischer Sender mit Mach-Zehnder-Modulator
Emetteur optique CRZ utilisant un modulateur de Mach-Zehnder

(30) Priority: 10.12.2002 KR 2002078248
(43) Date of publication of application: 16.06.2004
(73) Proprietor: SAMSUNG ELECTRONICS CO., LTD., Suwon-City, Kyungki-do (KR)
(72) Inventor: Kim, Sung-Kee, Samsung Electronics Co., Ltd., Suwon-city, Kyungki-do (KR); Hwang, Seong-Taek, Samsung Electronics Co., Ltd., Suwon-city, Kyungki-do (KR)
(74) Representative: Grünecker, Kinkeldey, Stockmair & Schwanhäusser Anwaltssozietät

(56) References cited:
- EP-A- 0 977 382
- US-A1- 2001 053 165

## Description

The present invention relates to an optical Chirped Return-to-Zero (CRZ) transmitter using a Mach-Zehnder (MZ) modulator, and more particularly to an optical CRZ transmitter for converting Non-Retum to Zero (NRZ) data to optical Return-to-Zero (RZ) data, and imposing a chirp signal on the converted optical RZ data to create a new modulation signal.

Typically, an optical RZ signal is weakened by dispersion while being transmitted via optical fibers because it has a pulse width less than an NRZ signal. On the contrary, the optical RZ signal is very resistant to a nonlinear phenomenon such as a Self Phase Modulation (SPM). Since the RZ signal has a pulse width less than the NRZ signal, it has a higher peak power even though the same power is applied to both the RZ and NRZ signals. As a result, the RZ signal has signal reception sensitivity better than the NRZ signal. However, the RZ signal has a wider spectrum than the NRZ signal such that it is more easily dispersed than the NRZ signal.

While a linear phenomenon such as dispersion is easily compensated by a dispersion compensation optical fiber, a nonlinear phenomenon is not easily compensated. Therefore, the RZ signal has better characteristics than the NRZ signal when applied for long-distance transmission.

In addition, if a negative chirp signal is imposed on an optical RZ signal, the dispersion phenomenon in optical transmission can be easily obviated. Therefore, when a negative chirp signal is imposed on this RZ signal, the RZ signal can be substituted for the NRZ signal and effective long-distance transmission can be achieved.

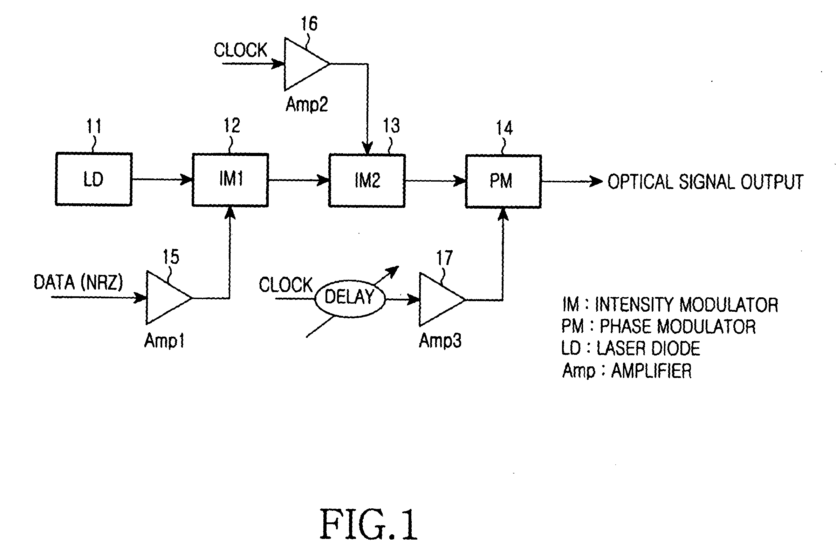

There has been development in a variety of optical CRZ transmitters. A representative conventional optical CRZ transmitter is shown in Fig. 1.

Referring to Fig. 1, a conventional optical CRZ transmitter includes a laser diode (LD) 11 for generating an optical signal; a first amplifier 15 for receiving/amplifying NRZ data; a first optical intensity modulator 12 for modulating the NRZ data amplified by the first amplifier 15, and transmitting the modulated NRZ data to the optical signal generated from the laser diode 11; a second amplifier 16 for receiving/amplifying a clock signal; a second optical intensity modulator 13 for modulating the clock signal amplified by the second amplifier 16, and transmitting the modulated clock signal to the optical signal received from the first optical intensity modulator 12; a third amplifier 17 for amplifying a clock signal delayed to generate a chirp signal, and transmitting the delayed clock signal; and a phase modulator 14 for modulating the delayed clock signal received from the third amplifier 17, and transmitting the modulated clock signal to the optical signal received from the second optical intensity modulator 13 to create a CRZ signal.

As noted above, such a conventional optical CRZ transmitter uses two optical intensity modulators 12 and13 and one phase modulator 14. The first optical intensity modulator 12 is adapted to impose the NRZ data on the optical signal. The second optical intensity modulator is adapted to optically convert a NRZ signal into a RZ signal using a clock signal.

Also, the phase modulator 14 is adapted to impose a chirp signal on the optical RZ signal by performing a phase modulation using a clock signal. In such an optical CRZ transmitter, it is possible to vary the chirp signal, provided that a delay value of the clock signal is properly adjusted.

In this case, provided that an optical pulse signal is transmitted via an anomalous region of an optical fiber, a delay value is properly adjusted to allow the optical pulse signal have a negative chirp signal. This is needed, because transmission characteristics of the optical pulse signal are enhanced by the negative chirp signal, which is commonly adapted to decrease a leading edge frequency of the optical pulse signal and increase a falling edge frequency thereof.

When using such a conventional optical CRZ transmitter, (1) two optical intensity modulators and one phase modulator should be employed. (2) a signal delay process should be performed to properly adjust such a chirp signal, and (3) three electric amplifiers 15, 16 and 17 are required to obtain a desired voltage at which respective modulators are operable. These requirements thereby make the overall construction of such a transmitter complicated.

Further, because of the high number of requisite components, such an optical CRZ transmitter is not cost efficient.

EP-A-0 977 382 relates to an optical transmission system, and a transmitter and/or receiver used in optical communication. The optical transmission system has an input terminal which receives (non-return-to-zero) NRZ electrical signals, and an electrical-optical conversion means which receives the NRZ electrical signal and converts the same to a (retum-to-zero) RZ optical signal, wherein the electrical-optical conversion means comprises a clock electrical signal generation means for providing a clock electrical signal with which the NRZ electrical signal is synchronized. In detail, the input electrical signal in non-return-to-zero format is first pre-coded to produce a binary pre-coded NRZ signal so that the binary pre-coded NRZ signal is inverted for each binary one of the binary values of the input NRZ signal. The pre-coded NRZ signal is differentiated to produce a temary-level electrical signal having a first level, second level and third level. The first level corresponds to a rising edge, the third level corresponds to a failing edge, and the second level corresponds to a duration between a rising edge and a falling edge, of a pre-coded NRZ signal. Thus, polarity of the pulse at the rising edge is opposite to that of the falling edge. The differentiated signal drives an optical intensity modulator to produce an optical signal in RZ format in whichever phase of the optical signal is inverted for each optical marked pulse. Preferably, the optical intensity modulator comprises a Mach-Zehnder optical intensity modulator. A first and a second AC-coupled type driver is provided for amplifying the differentiated signal to a level high enough to operate an optical intensity modulator.

US 2001/0053165 A1 relates to apparatus and methods for generating optical signals. Specifically, a return-to-zero pulse generator is disclosed that comprises an electro-absorption modulator and a controller. The controller generates one or more control signals to control amplitudes of DC and AC voltages supplied to the electro-absorption modulator. The return-to-zero pulse generator can comprise a clock source to generate a clock signal from which the AC voltage is derived. The electro-absorption modulator receives continuous wave laser light that is modulated based on the DC and AC voltages to generate an optical pulse signal with a frequency determined by the frequency of the AC voltage. The controller can be programmed to generate the DC and AC voltages to obtain a target duty cycle for the optical pulse signal generated by the electro-absorption modulator. The return-to-zero pulse generator can comprise a phase modulator controlled by the controller to induce the variable frequency chirp on the optical pulse signal to counteract the effects of dispersion and the residual chirp of the electro-absorption modulator. The return-to-zero pulse generator can also comprise an optical amplifier for amplifying the optical pulse signal.

It is the object of the present invention to provide an optical CRZ transmitter using a Mach-Zehnder (MZ) modulator, and to enable a simpler construction process and reduced production cost.

This object is solved by the subject matters of the independent claims. Preferred embodiments are defined in the dependent claims.

In accordance with one aspect of the present invention, an optical CRZ transmitter is provided, using a Mach-Zehnder (MZ) modulator, including a logic operation unit for receiving a NRZ data signal and a clock signal, performing a logic operation between the NRZ data signal and the clock signal, and generating electric RZ data; an amplifier for amplifying the electric RZ data generated from the logic operation unit; and a MZ modulation unit for modulating the electric RZ data amplified by the amplifier into an optical signal, and imposing a chirp signal on the optical signal by varying an input voltage of the amplified electric RZ data.

In accordance with another aspect of the present invention, an optical CRZ transmission apparatus is provided, including a logic operation unit for receiving a NRZ data signal and a clock signal, and performing a logic operation between the NRZ data signal and the clock signal to create electric RZ data; a first amplifier for amplifying a true signal received from the logic operation unit; a second amplifier for amplifying a complement signal of the true signal, received from the logic operation unit; and a MZ modulation unit for modulating the true signal and the complement signal respectively received from the first and second amplifiers into an optical signal, and imposing a chirp signal on the optical signal by varying each input voltage of the true and complement signals.

The present invention will be more clearly understood from the following detailed description taken in conjunction with the accompanying drawings, in which:
Fig. 1 is a schematic diagram of a conventional optical CRZ transmitter;
Fig. 2 is a schematic diagram of an optical CRZ transmitter using a dual-arm MZ modulator in accordance with the principles of the present invention;
Fig. 3 is a schematic diagram of an optical CRZ transmitter using a single-arm MZ modulator in accordance with the principles of the present invention;
Fig. 4 is a signal waveform diagram at each node of the optical CRZ transmitter shown in Fig. 2;
Fig. 5 is an exemplary graph illustrating a simulation result between an optical CRZ signal and a chirp signal through the use of an optical CRZ transmitter using a MZ modulator according to the present invention; and
Fig. 6 is an exemplary graph illustrating a transmission simulation result for which an optical CRZ transmitter using a MZ modulator and a conventional RZ transmitter are employed according to the present invention.

In the following description of the present invention, for purposes of explanation rather than limitation, specific details are set forth such as the particular architecture, interfaces, techniques, etc., in order to provide a thorough understanding of the present invention. However, it will be apparent to those skilled in the art that the present invention may be practiced in other embodiments that depart from these specific details. Moreover, it will be recognized that certain aspects of the figures are simplified for explanation purposes and that the full system environment for the invention will comprise many known functions and configurations all of which need not be shown here. In the drawings, the same or similar elements are denoted by the same reference numerals even though they are depicted in different drawings.

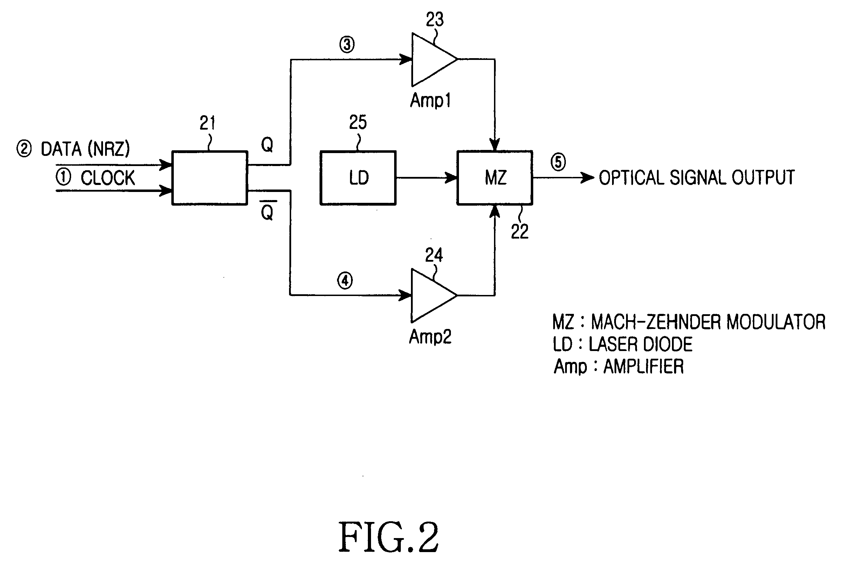

Fig. 2 is a schematic diagram of an optical CRZ transmitter using a dual-arm MZ modulator according to the principles of the present invention.

Referring to Fig. 2, an optical CRZ transmitter using a dual-arm MZ modulator includes a laser diode (LD) 25 for generating an optical signal; a logic operation unit 21 for receiving NRZ data and a clock signal, performing a logic operation on the NRZ data and the clock signal, and generating a result signal Q of the logic operation and its complement signal *Q̅*; first and second amplifiers 23 and24 amplify the logic operation result signal Q and its complement signal *Q̅*; and a dual-arm MZ (Mach-Zehnder) modulator 22 for modulating the optical signal generated from the laser diode 21 with the logic operation result signal Q and its complement signal *Q̅* amplified by first and second amplifiers 23 and24, and imposing a chirp signal on the modulated optical signal by varying an input voltage. The above logic operation indicates a logical product (i.e., AND) operation in a preferred embodiment of the present invention.

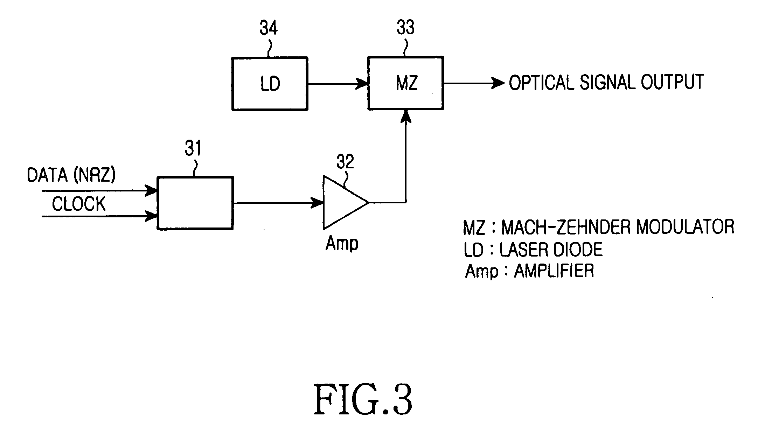

Fig. 3 is a schematic diagram of an optical CRZ transmitter using a single-arm MZ modulator according to the present invention.

Referring to Fig. 3, an optical CRZ transmitter using a single-arm MZ modulator includes a laser diode (LD) 34 for generating an optical signal; a logic operation unit 31 for receiving NRZ data and a clock signal, performing a logic operation on the NRZ data and the clock signal, and generating a result signal of the logic operation; an amplifier 32 for amplifying the logic operation result signal generated from the logic operation unit 31; and a single-arm MZ (Mach-Zehnder) modulator 33 for modulating the optical signal generated from the laser diode 34 with the logic operation result signal amplified by the amplifier 32, and imposing a chirp signal on the modulated optical signal by varying an input voltage. The above logic operation indicates a logical product (i.e., AND) operation in a preferred embodiment of the present invention.

As shown in Figs. 2 and 3, the optical CRZ transmitter using such a MZ modulator converts electric NRZ data into electric RZ data through the use of a logic operation with a clock signal. Preferably, the logic operation converts the NRZ data into the RZ data through the use of an AND operation between a clock signal and the NRZ data.

As noted above, the optical CRZ transmitter using an MZ-modulator (1) performs an AND operation on electric NRZ data and a clock signal to create electric RZ data, (2) optically modulates the electric RZ data, and (3) imposes a chirp signal on the modulated data through the use of characteristics of the MZ modulator in an optical modulation. In contact, a conventional method (1) optically modulates electric NRZ data to be transmitted, (2) modulates the modulated electric NRZ data with a clock signal to create optical RZ data, and (3) optically modulates the optical RZ data with a delayed clock signal to impose a chirp signal on the modulated optical RZ data.

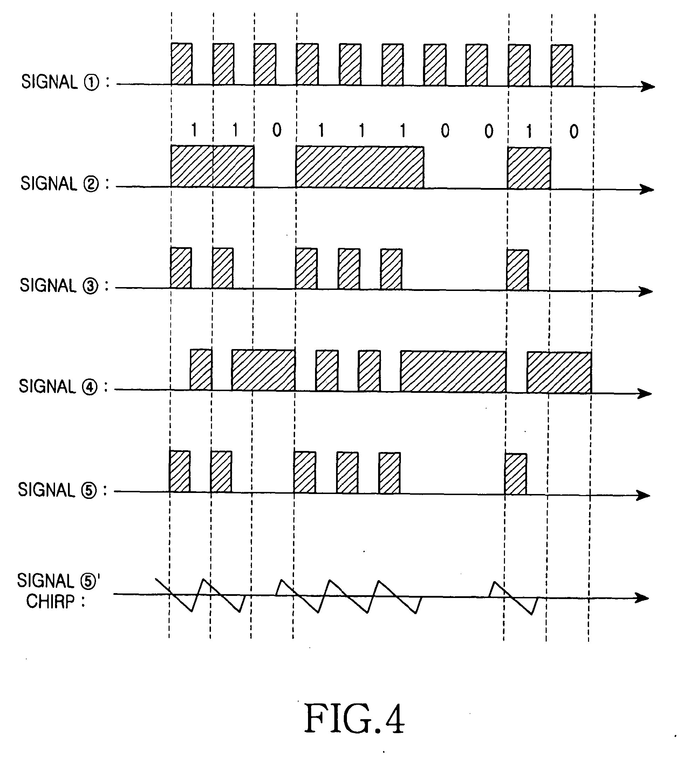

Fig. 4 is a signal waveform diagram at each position (i.e., node) of the optical CRZ transmitter shown in Fig. 2.

Referring to Fig. 4, reference character ① denotes a clock signal, and reference character ② denotes an arbitrary NRZ data signal, for example, '1101110010'. Reference character ③ denotes the result signal of an AND operation between the clock signal ① and the NRZ data signal ② Reference character ④ denotes a logical inverse signal (i.e., a complement signal) of the signal ③. This signal ④ is one of two output signals of logic operation unit 21, shown in Fig. 2.

In addition, reference character ⑤ denotes an optically modulated signal made by the MZ-modulator 22, and the last signal shown in Fig. 4 denotes a chirp signal of the signal ⑤. Provided that two input signals being the signals ③ and ④ are properly varied, the magnitude and sign (i.e., + or -) of the chirp signal vary with the signals ③ and ④.

There are a variety of prior art methods for controlling the MZ modulator's chirp, which are well known in the art. Thus, their detailed description will be omitted herein. A representative of such a prior art method is disclosed in Korean Patent Laid-open Publication No. 1999-6929, entitled "OPTICAL MODULATOR AND METHOD FOR MODULATING OPTICAL SIGNAL".

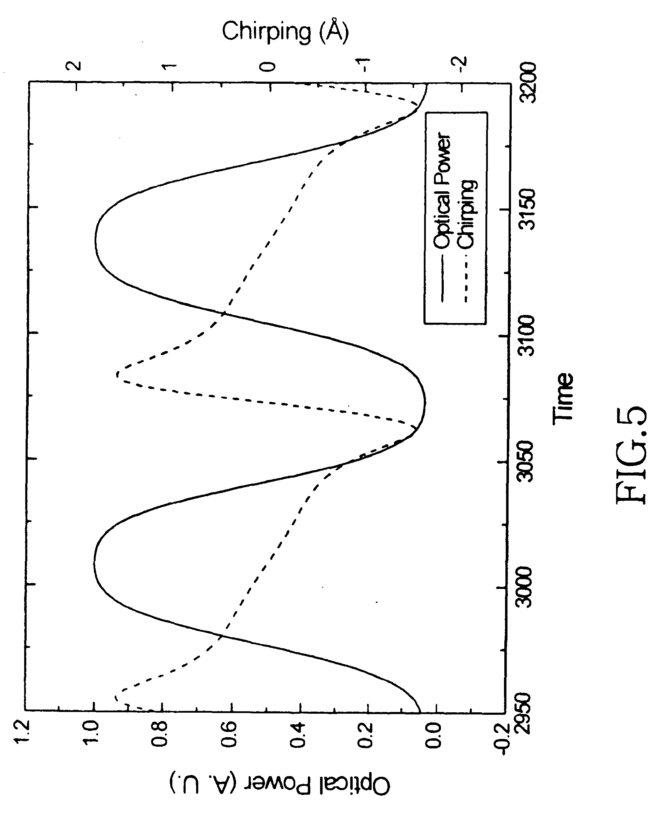

Fig. 5 is an exemplary graph illustrating a simulation result between an optical CRZ signal and a chirp signal through the use of an optical CRZ transmitter using a MZ modulator, in accordance with the principles of the present invention. Here, the X-axis indicates time, the left Y-axis indicates optical power (A.U), and the right Y-axis indicates a chirping level of a chirp signal. As shown in Fig. 5, each pulse can obtain a linear chirp.

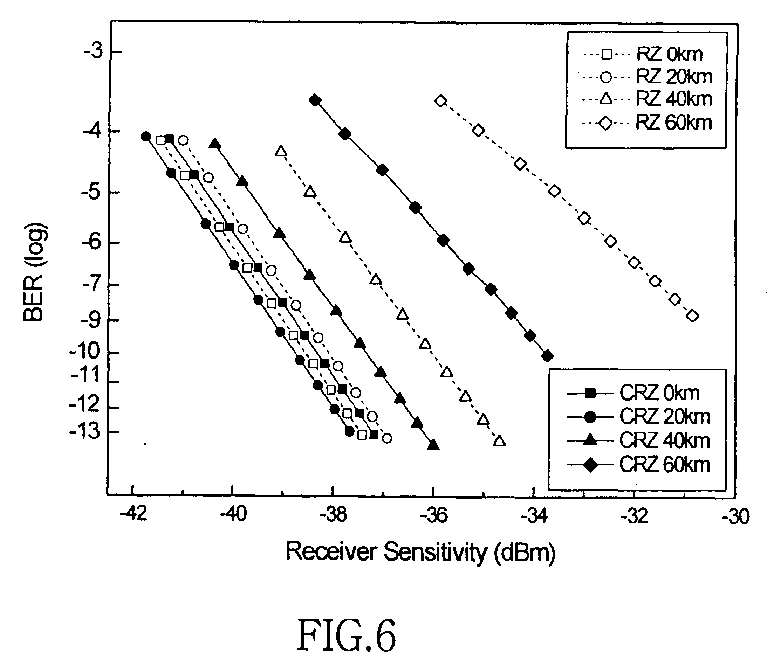

Fig. 6 is an exemplary graph illustrating a transmission simulation result for which an optical CRZ transmitter using a MZ modulator and a conventional RZ transmitter are employed. Here, the X-axis indicates receiver sensitivity and the left Y-axis indicates the Bit Error Rate (BER).

As shown in Fig. 6, a BER characteristic curve created by transmitting an RZ signal of 10Gb/s via standard single-mode optical fibers of 0km, 20km, 40km and 60km is compared with the other BER characteristic curve created by transmitting a CRZ signal via the standard single-mode optical fibers of 0km, 20km, 40km and 60km.

Analyzing the results of the comparison, it is noted that the strength of the CRZ signal is higher than that of the RZ signal by an amount equal to the receiver sensitivity of about more than 2dBm in long-distance transmission over 40km. Importantly, the fact that the CRZ signal has better transmission characteristics than the RZ signal can be clearly understood with reference to the simulation result of Fig. 6.

As apparent from the above description, the optical CRZ transmitter according to the present invention creates a CRZ signal using a single logic operator and a single MZ modulator. Therefore, the present invention removes one optical intensity modulator, one phase modulator, one or two electric amplifiers, and one delay circuit from the conventional CRZ transmitter. Consequently, the overall construction is simplified and a more cost-efficient construction is provided.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. An optical chirped return-to-zero transmission apparatus, comprising:
a logic operation unit (21) to generate electric return-to-zero data from a received non return-to-zero data signal and clock signal;
a first amplifier (23) to amplify a true signal based on the electric return-to-zero data generated by the logic operation unit;
a second amplifier (24) to amplify a complement signal of said true signal; and
a dual-arm mach-zehnder modulator (22) connected to be provided with an output of said first and second amplifiers, and adapted to modulate the amplified true and complement signals respectively received from the first and second amplifiers into an optical signal, and impose a chirp signal on the optical signal by varying each input voltage of the true and complement signals.

2. The apparatus as set forth in claim 1, wherein the logic operation unit performs an AND operation between the non return-to-zero data signal and the clock signal.

3. The apparatus as set forth in claim 1 or 2, wherein the chirp signal is a negative chirp signal.

4. An operation method adapted to operate an optical chirped return-to-zero transmission apparatus, wherein the method comprises the steps of:
generating, by a logic operation unit (21), electric return-to-zero data from a received non return-to-zero data signal and clock signal;
amplifying, by a first amplifier (23), a true signal based on the generated electric return-to-zero data;
amplifying, by a second amplifier (24), a complement signal of said true signal;
providing the amplified true and complement signals from the first and second amplifiers, respectively, to a dual-arm mach-zehnder modulator (22); and
modulating, by the dual-arm mach-zehnder modulator, the amplified true and complement signals into an optical signal and imposing, by said dual-arm mach-zehnder modulator, a chirp signal on the optical signal by varying each input voltage of the true and complement signals.

5. The operation method as set forth in claim 4, wherein generating said electric return-to-zero data comprises performing an AND operation between the non-return-to-zero data signal and the clock signal.

6. The operation method as set forth in claim 4 or 5, wherein the chirp signal is a negative chirp signal.

## Patentansprüche

1. Optische gechirpte Return-To-Zero-Übertragungsvorrichtung, die umfasst:
eine logische Operationseinheit (21), die elektrische Return-To-Zero-Daten aus einem empfangenen Non-Return-To-Zero-Datensignal und einem Taktsignal erzeugt;
einen ersten Verstärker (23), der ein WAHR-Signal verstärkt, das auf den elektrischen Return-To-Zero-Daten basiert, die von der logischen Operationseinheit erzeugt werden;
einen zweiten Verstärker (24), der ein Komplementär-Signal des WAHR-Signals verstärkt; und
einen Mach-Zehnder-Modulator (22) mit zwei Armen (22), der so verbunden ist, dass ihm ein Ausgang des ersten und des zweiten Verstärkers bereitgestellt wird, und der so eingerichtet ist, dass er das verstärkte WAHR- sowie das Komlementär-Signal, die von dem ersten bzw. dem zweiten Verstärker empfangen werden, zu einem optischen Signal moduliert und ein Chirp-Signal auf das optische Signal auflegt, indem er jede Eingangsspannung des WAHR- und des Komplementär-Signals variiert.

2. Vorrichtung nach Anspruch 1, wobei die logische Operationseinheit eine UND-Operation zwischen dem Non-Return-To-Zero-Datensignal und dem Taktsignal durchführt.

3. Vorrichtung nach Anspruch 1 oder 2, wobei das Chirp-Signal ein negatives Chirp-Signal ist.

4. Betriebsverfahren, das zum Betreiben einer optischen Chirp-Retum-To-Zero-Sendevorrichtung eingerichtet ist, wobei das Verfahren folgende Schritte umfasst:
Erzeugen elektrischer Return-To-Zero-Daten aus einem empfangenen Non-Return-To-Zero-Datensignal und einem Taktsignal mit einer logischen Operationseinheit (21);
Verstärken eines WAHR-Signals, das auf den erzeugten elektrischen Return-To-Zero-Daten basiert, mit einem ersten Verstärker (23);
Verstärken eines Komplementär-Signals des WAHR-Signals mit einem zweiten Verstärker (24);
Bereitstellen des verstärkten WAHR-Signals und des Komplementär-Signals von dem ersten bzw. zweiten Verstärker für einen Mach-Zehnder-Modulator (22) mit zwei Armen; und
Modulieren des verstärkten WAHR- und des Komplementär-Signals zu einem optischen Signal mit dem Mach-Zehnder-Modulator mit zwei Armen und Auflegen eines Chirp-Signals auf das optische Signal durch Variieren jeder Eingangsspannung des WAHR- und des Komplementär-Signals mit dem Mach-Zehnder-Modulator mit zwei Armen.

5. Betriebsverfahren nach Anspruch 4, wobei Erzeugen der elektrischen Return-To-Zero-Daten Durchführen einer UND-Operation zwischen dem Non-Return-To-Zero-Datensignal und dem Taktsignal umfasst.

6. Betriebsverfahren nach Anspruch 4 oder 5, wobei das Chirp-Signal ein negatives Chirp-Signal.ist.

## Revendications

1. Dispositif de transmission à retour au zéro à modulation optique, comprenant :
une unité d'opération logique (21) pour générer des données de retour au zéro électrique à partir d'un signal de données sans retour au zéro reçu et d'un signal d'horloge ;
un premier amplificateur (23) pour amplifier un signal vrai en fonction des données de retour au zéro électrique générées par l'unité d'opération logique ;
un deuxième amplificateur (24) pour amplifier un signal complémentaire dudit signal vrai ; et
un modulateur de Mach-Zehnder à deux branches (22) connecté de façon à se voir délivrer une sortie desdits premier et deuxième amplificateurs, et adapté pour moduler les signaux vrai et complémentaire amplifiés respectivement reçus à partir des premier et deuxième amplificateurs sous la forme d'un signal optique, et pour appliquer un signal de modulation au signal optique en faisant varier chaque tension d'entrée des signaux vrai et complémentaire.

2. Dispositif selon la revendication 1, dans lequel l'unité d'opération logique effectue une opération ET entre le signal de données sans retour au zéro et le signal d'horloge.

3. Dispositif selon la revendication 1 ou 2, dans lequel le signal de modulation est un signal de modulation négatif.

4. Procédé de fonctionnement adapté pour faire fonctionner un dispositif de transmission à retour au zéro à modulation optique, le procédé comprenant les étapes consistant à :
générer, à l'aide d'une unité d'opération logique (21), des données de retour au zéro électrique à partir d'un signal de données sans retour au zéro reçu et d'un signal d'horloge ;
amplifier, à l'aide d'un premier amplificateur (23), un signal vrai en fonction des données de retour au zéro électrique générées ;
amplifier, à l'aide d'un deuxième amplificateur (24), un signal complémentaire dudit signal vrai ;
délivrer les signaux vrai et complémentaire amplifiés à partir des premier et deuxième amplificateurs, respectivement, à un modulateur de Mach-Zehnder à deux branches (22) ; et
moduler, à l'aide du modulateur de Mach-Zehnder à deux branches, les signaux vrai et complémentaire amplifiés sous la forme d'un signal optique, et appliquer, à l'aide dudit modulateur de Mach-Zehnder à deux branches, un signal de modulation sur le signal optique en faisant varier chaque tension d'entrée des signaux vrai et complémentaire.

5. Procédé de fonctionnement selon la revendication 4, dans lequel la génération desdites données de retour au zéro électrique comprend la réalisation d'une opération ET entre le signal de données sans retour au zéro et le signal d'horloge.

6. Procédé de fonctionnement selon la revendication 4 ou 5, dans lequel le signal de modulation est un signal de modulation négatif.
